# EUROPÄISCHE PATENTSCHRIFT

(11) **EP 3 034 234 B1**
(45) Veröffentlichungstag und Bekanntmachung des Hinweises auf die Patenterteilung: **13.02.2019**
(21) Anmeldenummer: 14198389.0
(22) Anmeldetag: 16.12.2014
(51) Int. Cl.: B23Q 3/06, B23P 15/00, B23Q 11/00, F01D 5/00

(54) **Verfahren und Vorrichtungssystem zur Bearbeitung eines Werkstückes**
Method and system for machining a workpiece
Procédé et système de dispositif destinés à l'usinage d'une pièce

(43) Veröffentlichungstag der Anmeldung: 22.06.2016
(73) Patentinhaber: Fraunhofer-Gesellschaft zur Förderung der angewandten Forschung e.V., 80686 München (DE)
(72) Erfinder: Kalocsay, Roman, 52074 Aachen (DE); Kolvenbach, Christian, 52064 Aachen (DE)
(74) Vertreter: Naeven, Ralf

(56) Entgegenhaltungen:
- EP-A2- 2 218 542
- US-A- 2 612 082
- US-A- 5 867 885

## Beschreibung

Die Erfindung betrifft ein Verfahren zur Bearbeitung von Schaufeln eines Laufrades sowie ein Vorrichtungssystem gemäß dem Oberbegriff des Anspruchs 7.

Der Gegenstand der Erfindung bezieht sich auf die Bearbeitung von Werkstücken, die aufgrund ihrer Struktur und/oder Aufhängung dazu neigen, dem Druck eines Werkzeuges auszuweichen und/oder während der Bearbeitung in Schwingungen zu geraten, wodurch die Bearbeitung ungenau werden kann und zudem Werkstück und Werkzeug einer ungewünscht hohen Belastung ausgesetzt sein können. Diese Problematik ist nicht auf bestimmte Werkstücke eingeschränkt, ist aber z.B. bei der Bearbeitung von Schaufeln von Laufrädern, insbesondere von Schaufeln in BLISK-Bauweise gegenwärtig und hat erhebliche Folgen für Fertigungsaufwand und Kosten. BLISK steht für "Blade Integrated Disk" und bedeutet einen Schaufelrotor, bei dem die Schaufeln einstückig mit dem Rest des Werkstückes verbunden sind. Durch die Integralbauweise werden Montagekosten und ein erhebliches Gewicht eingespart. Derartige Schaufelrotoren finden z.B. im Triebwerks- und Turbinenbau Verwendung

Für die Produktion von Laufrädern in BLISK-Bauweise werden bekanntermaßen entweder die groben Außenkonturen der Schaufelprofile durch spanende Bearbeitung aus einer geschmiedeten Scheibe ausgearbeitet oder die bereits im Groben gefertigten Schaufelprofile durch Reibschweißen auf eine geschmiedete Scheibe aufgesetzt. Bei beiden Verfahren ist jedoch noch eine spanende Endbearbeitung notwendig, um die geforderte hochgenaue Endkontur des Laufrades zu realisieren.

Die Schaufelsegmente eines Laufrades in BLISK-Bauweise bilden zum Zeitpunkt der Endbearbeitung komplexe, dünnwandige und weitauskragende Strukturen aus hochfesten Materialien. Wegen der hierdurch bedingten geringen statischen Steifigkeit der Schaufeln kommt es wegen der gegebenen Prozesskräfte während der Bearbeitung besonders im Bereich des oberen Schaufelendes bei der Fräsbearbeitung zu unerwünscht großen statischen Werkstückabdrängungen. Dies hat zur Folge, dass im Fräsprozess nicht der geplante Materialabtrag erfolgt, sondern zumeist positive Aufmaße auf dem Werkstück verbleiben. Um dem entgegenzuwirken ist es bekannt, CAM-Programme zur Werkzeugsteuerung in der Serienbearbeitung aufwendig zu korrigieren, wodurch das Einfahren eines Prozesses durch die notwendigen, häufigen Versuche unerwünscht lange dauert und entsprechend hohe Kosten erzeugt. CAM-Lösungen, die ohne aufwändige Korrekturschleifen die statische Werkstückabdrängung bei der Bahnplanung berücksichtigen, befinden sich derzeit erst noch in der Entwicklung.

Ein weiteres erhebliches Problem bei der Fertigung von Laufrädern in BLISK-Bauweise bilden unerwünschte Werkstückschwingungen. Die dünnwandigen und direkt stoffschlüssig mit dem massiven Grundkörper verbundenen Metallschaufeln bilden ein schwingendes System mit sehr geringen Dämpfungswerten von in der Regel weniger als 1 ‰. Während des Fräsprozesses werden die Schaufeln durch den unterbrochenen Schnitt des Fräsers periodisch mit der Zahneingriffsfrequenz und deren harmonischen Vielfachen angeregt. Aufgrund von Unwuchten im Werkzeug, durch Aufbauschneidenbildung und durch den Werkzeugverschleiß kann zudem ein ungleichmäßiger Zahneingriff gegeben sein, der die Anregungsfrequenzen amplitudenmoduliert, wodurch zu der Anregungsfrequenz zahlreiche Seitenbänder entstehen, mit denen die bearbeitete Schaufel ebenfalls angeregt wird. Ein stabiles Prozessfenster zu finden, bei dem keine Eigenfrequenz der Schaufel bei der Bearbeitung getroffen wird, ist schwierig und oftmals unmöglich, insbesondere da die Eigenfrequenzen der Schaufeln durch den fortlaufenden Materialabtrag verändert werden. Aufgrund der Schwingungsproblematik sind insbesondere die Schlichtprozesse bei der Endbearbeitung der Schaufeln in der Regel dynamisch instabil, wodurch Formabweichungen, schlechte Oberflächen und ein sehr hoher Werkzeugverschleiß entstehen. Ein kostenintensiver Nachbearbeitungsprozess, z. B. durch Schleifen, Strömungsläppen oder Trowalisieren ist daher eine zwingende Folge.

Aufgrund der hohen Sensibilität der Prozesse ist die Toleranz gegenüber einem Verschleiß der eingesetzten Werkzeuge sehr gering, so dass diese nach kurzer Einsatzdauer gewechselt werden und somit der Werkzeugverbrauch überdurchschnittlich kostentreibend ist.

Außer bei der Fertigung treten die oben angesprochenen Probleme auch bei spanenden Reparaturmaßnahmen auf.

Um den oben angesprochenen Problemen zu begegnen, ist es - abgesehen von den schon oben angesprochenen Versuchen einer Anpassung der Prozessparameter - bekannt, die Schaufeln blockweise zu bearbeiten. Bei der blockweisen Bearbeitung wird die jeweilige Schaufel in verschiedene Höhensegmente eingeteilt. Der oberste Bereich wird direkt fertig bearbeitet, während z. B. der mittlere Höhenbereich nur vorgeschlichtet wird und im Bereich des Schaufelfußes noch größere Aufmaße beibehalten werden. Durch diese Methode wird das Flächenträgheitsmoment der bearbeiteten Schaufel im Schaufelfuß und damit die Stabilität erhöht. Die Block-Methode hat jedoch zwei wesentliche Nachteile: Zum einen werden bei der Bearbeitung Eigenspannungen frei, die bei der schmiedenden Erzeugung in das Material eingearbeitet werden und die auch durch eine thermische Nachbehandlung nicht zuverlässig beseitigt werden können. Die Freisetzung der Eigenspannungen führt zu einer zumeist tordierenden Verformung, die die Schaufel aus dem Toleranzbereich bringen kann. Der mögliche Weg, die in Folge der Eigenspannung entstehenden Verformungen durch eine Bahnanpassung im CAM-Programm zu kompensieren, ist aufwändig und insbesondere dann problematisch, wenn sich das Herstellungsverfahren des Werkstückes verändert, z. B. durch einen geänderten Schmiedeprozess oder bei einem Wechsel zu einem anderen Zulieferer. Eine Anpassung der Prozessparameter gelingt oftmals erst nachdem erheblicher Ausschuss mit entsprechend hohen Kostenfolgen produziert wurde.

Ein weiterer Nachteil der Block-Methode sind die Übergänge, die zwischen den einzelnen Blocksegmenten nach dem Schlichtprozess verbleiben. Die stets deutlich sichtbar verbleibenden Übergangsstreifen stören das Erscheinungsbild der Schaufeln erheblich und verursachen den Bedarf an Nacharbeit durch Schleifen, auch wenn aus strömungstechnischer Sicht ein optisch sichtbarer Übergang möglicherweise tolerierbar wäre.

Aus der DE 10 2009 004 791 A1 ist als Darstellung des vorherigen Standes der Technik die Methode bekannt, zwischen den Schaufeln elastische Dämpfungselemente zu montieren oder die Schaufeln mit Elastomerelementen zu umgeben oder den Raum zwischen den Schaufeln zu vergießen. Hierdurch können Schwingungen in gewissem Maße gedämpft werden; einer Werkstückabdrängung wirkt das elastische Material jedoch nicht in hinreichender Weise entgegen. Plastische Dämpfungsmaterialien sind überdies umweltbelastend. Da die Dämpfungsmaterialien während des Bearbeitungsprozesses mit abgearbeitet werden, vermischen sich die Dämpfungsmaterialien mit den Spänen und erschweren deren Recycling. Zudem sind die Prozesse zur Anbringung der Dämpfungsmaterialien kostenintensiv und können nicht automatisiert werden.

Aus der US 5,867,885 A sind ein Verfahren und eine Vorrichtung zur Bearbeitung von Schaufeln in BLISK-Bauweise bekannt. Es ist offenbart, zur Fixierung der Schaufeln einen den Schaufelrotor umgebenden Ring mit radial nach innen vorstehenden Pins vorzusehen, die in jeden zweiten, zwischen benachbarten Schaufeln gegebenen Zwischenraum hineinragen. Die mit Pins versehenen Zwischenräume werden mit einem aushärtenden Material ausgegossen, welches stoffschlüssig den Ring am Werkstück fixiert. In den freibleibenden Zwischenräumen werden die Oberflächen der Schaufeln bearbeitet. Im nächsten Schritt wird das aushärtende Material entfernt, die Pins werden einen Zwischenraum weitergesetzt und mit dem aushärtenden Material umgossen, um anschließend die dann zugänglichen Oberflächen in den anderen Zwischenräumen zu bearbeiten. Diese Vorgehensweise ist aufwändig und zudem mit der Entsorgung des aushärtenden Materials belastet.

Aus der US 2,612,082 A ist eine Vorrichtung zur Bearbeitung einzelner, für ein Laufrad vorgesehener Schaufeln bekannt, bei der die Schaufel selbst als Werkstück eingespannt wird und zur Bearbeitung einer der Schaufelflächen auf der anderen Schaufelfläche abgestützt wird. Hierzu wird ein abstützendes Element durch einen Gießprozess erstellt, um ihm eine an die Schaufelform angepasste Form zu geben. Diese Vorgehensweise ist ebenfalls aufwändig.

Aus der Bearbeitung von Wellen oder Achsen ist zur Vermeidung von Schwingungen und Verbiegungen während des Bearbeitungsprozesses der Einsatz einer Lünette allgemein bekannt (siehe z.B. EP 2 218 542 A2), welche auf dem Maschinenkörper abgestützt ist und die Welle oder Achse diese umschließend fixiert. Eine solche Lünette ist zum Einspannen ganzer Laufräder, deren schaufeln zu bearbeiten sind, ungeeignet.

Aus der DE 20 2010 008 628 U1 ist eine Einrichtung zur Bearbeitung einer einzelnen Turbinenschaufel bekannt, bei der die Turbinenschaufel zwischen zwei Spannstellen und zusätzlich in eine speziell hergerichtete Lünette eingespannt wird. Die Lünette weist hydraulisch bewegte Spannelemente auf, die sich beidseitig auf die Schaufeloberflächen pressen und anschließend geklemmt werden. Antriebe ermöglichen es, zum einen die Lünette entlang der Längsachse der Turbinenschaufel zu bewegen und zum anderen die in einem gegenüber einem Grundteil der Lünette drehbaren Drehteil eingespannte Turbinenschaufel um ihre Längsachse zu drehen. Eine Bearbeitung der Schaufeln eines eine Vielzahl von Schaufeln aufweisenden Werkstückes ist damit nicht möglich. Zudem ist die offenbarte Lünette aufwendig im Aufbau, da das am Werkstück zu fixierende Drehteil drehbar gegenüber dem Grundteil gelagert werden muss. Außerdem sind Maßnahmen zum Antrieb des Drehteils erforderlich.

Der Erfindung liegt das technische Problem zugrunde, ein Verfahren sowie ein Vorrichtungssystem der eingangs genannten Art zur Verfügung zu stellen, die eine Ausweichbewegung oder ein unerwünschtes Schwingungsverhalten einer zu bearbeitenden Schaufel des Laufrades verhindern oder zumindest erheblich reduzieren können.

Bei einem Verfahren zur Bearbeitung eines Werkstückes wird das technische Problem mit den Merkmalen des Anspruchs 1 gelöst.

Demnach wird mittels einer an der zu bearbeitenden Schaufel klemmend befestigten Stabilisierungseinrichtung die Schaufel mechanisch stabilisiert. Die Stabilisierungseinrichtung kann dazu eingesetzt werden, beim Bearbeitungsprozess auftretende Schwingungen des Werkstückes zu reduzieren oder zu eliminieren und/oder Werkstückabdrängungen zu minimieren.

Das erfindungsgemäße Verfahren kann so ausgeführt werden, dass die Stabilisierungseinrichtung zur Schwingungsdämpfung oder Schwingungstilgung eingesetzt wird.

Das erfindungsgemäße Verfahren kann vorteilhaft so ausgeführt werden, dass die Schaufel in eine Werkstückaufnahme der Stabilisierungseinrichtung eingeführt wird und in der Werkstückaufnahme mindestens ein Spannelement federelastisch in einer Spannelement-Pressrichtung gegen die Schaufel gepresst wird. Durch das Pressen des Spannelements gegen die Schaufel kontaktiert die Stabilisierungseinrichtung mindestens zwei unterschiedliche Orte der Werkstückoberfläche.

Weiterhin kann das erfindungsgemäße Verfahren so ausgeführt werden, dass die Stabilisierungseinrichtung zum einen an einer ersten zu bearbeitenden Schaufel des Laufrades klemmend und zum anderen an mindestens einer weiteren Schaufel oder an einer gesonderten Befestigungseinheit befestigt wird.

Durch die Befestigung der Stabilisierungseinrichtung an mindestens einer weiteren Schaufel oder an mindestens einer gesonderten Befestigungseinheit wird die Stabilisierung der zu bearbeitenden Schaufel besonders wirkungsvoll. Eine gesonderte Befestigungseinheit kann zum Beispiel an der Bearbeitungsmaschine vorgesehen sein. Die mindestens eine weitere Schaufel des Werkstückes kann ebenfalls zur Bearbeitung vorgesehen sein.

Eine Stabilisierungseinrichtung, welche klemmend befestigt wird, ist grundsätzlich auch lösbar und kann somit wiederholt eingesetzt werden. Hierdurch ergeben sich erhebliche Vorteile gegenüber der aus dem Stand der Technik bekannten Maßnahmen der bloßen Dämpfung mittels elastischer Dämpfungselemente oder des Umgießens der zu bearbeitenden Schaufeln mit einem Kunststoff.

Eine wiederholte Einsetzbarkeit der Stabilisierungseinrichtung ist insbesondere bei Nutzung mit CNC-Bearbeitungsmaschinen nützlich und kann automatisiert werden. Vorzugsweise wird zum Greifen und Applizieren der Stabilisierungseinrichtung ein Handhabungsarm der Bearbeitungsmaschine eingesetzt, der auch für das Bearbeitungswerkzeug vorgesehen ist und z.B. eine Bearbeitungsspindel umfasst. So kann vorzugsweise die Stabilisierungseinrichtung vollständig automatisiert, z.B. CAMgesteuert, entsprechend einem Werkzeug innerhalb eines Wechselsystems eingesetzt werden. Je nach zu bearbeitendem Werkstück kann es zudem vorteilhaft sein, mehrere gleiche oder unterschiedliche Stabilisierungseinrichtungen vorzusehen, die an unterschiedlichen Werkstückteilen eingesetzt werden. Die Stabilisierungseinrichtung(en) kann (können) aus einem Magazin entnommen werden, das vorzugsweise auch Bearbeitungswerkzeuge enthält.

Des Weiteren kann es vorteilhaft sein, das erfindungsgemäße Verfahren so auszuführen, dass die Stabilisierungseinrichtung an der mindestens einen weiteren Schaufel des Laufrades befestigt wird, wobei die Stabilisierungseinrichtung für jede weitere zur Befestigung vorgesehene Schaufel jeweils eine weitere Werkstückaufnahme aufweist. Bei mindestens zweien der Werkstückaufnahmen wird in diesem Fall die zu bearbeitende Schaufel in die zugehörige Werkstückaufnahme eingeführt. In jeder eine Schaufel des Laufrades aufweisenden Werkstückaufnahme wird mindestens ein Spannelement federelastisch in einer Spannelement-Pressrichtung gegen die zu bearbeitende Schaufel gepresst.

Die Werkstückaufnahmen sind bei geeignetem Werkstück vorzugsweise so gestaltet, dass die Stabilisierungseinrichtung auf die zu umfassenden Schaufeln aufgeschoben werden kann, wodurch das Einführen der zu bearbeitenden Schaufel in die zugehörige Werkstückaufnahmen erfolgt.

Es ist vorteilhaft, das erfindungsgemäße Verfahren so auszuführen, dass in jeder Werkstückaufnahme mindestens zwei einander gegenüberliegende und mit den federelastischen Elementen gegeneinander arbeitende Spannelemente vorgesehen sind, welche die in die Werkstückaufnahme eingeführte Schaufel zwischen sich aufnehmen. Bei mindestens zwei in Werkstückaufnahmen aufgenommenen Schaufeln werden auf diese Weise Toleranzen in den Abständen zwischen den Schaufeln und/oder den Werkstückaufnahmen aufgefangen.

Insbesondere ist es vorteilhaft, wenn mit dem erfindungsgemäßen Verfahren die Bearbeitung von Schaufeln eines Laufrades in BLISK-Bauweise eingesetzt wird.

Das erfindungsgemäße Verfahren kann auch so ausgeführt werden, dass das mindestens eine Spannelement mit einer Fixierkraft in der Stabilisierungseinrichtung fixiert wird, wobei die Fixierkraft eine senkrecht zur Spannelement-Pressrichtung wirkende Kraftkomponente aufweist. Durch die Fixierkraft kann zusammen mit einer zwischen Spannelement und einem Element der Stabilisierungseinrichtung, z.B. einer Wand des Grundkörpers, gegebenen Reibungskraft eine besonders solide Befestigung der Stabilisierungseinrichtung an der Schaufel erreicht werden. Vorzugsweise sind Fixierkraft und Spannelement-Pressrichtung senkrecht aufeinander.

Bei einem Vorrichtungssystem der eingangs genannten Art wird das technische Problem durch die kennzeichnenden Merkmale des Anspruchs 7 gelöst. Eine vorteilhafte Ausbildungsform des Vorrichtungssystems ergibt sich aus den Merkmalen der Ansprüche 8 bis 19.

Die Stabilisierungseinrichtung gemäß Anspruch 13 weist einen Grundkörper auf, der Bestandteile aus massiven Materialien umfasst. Das mindestens eine Spannelement ist relativ zum Grundkörper bewegbar. Vorzugsweise wirkt zwischen dem Spannelement und dem Grundkörper mindestens ein federelastisches Element, z.B. in Form einer Spiralfeder. Das vorzugsweise starre Spannelement wird mit dem mindestens einen federelastischen Element gegen eine in die Werkstückaufnahme eingeführte Schaufel gepresst. Alternativ kann das in diesem Fall zumindest teilelastische Spannelement auch mit einem flüssigen oder gasförmigen Fluid befüllbar und über den Fluiddruck dehnbar ausgebildet sein. Durch eine geeignete Dehnung würde das Spannelement gegen die in die Werkstückaufnahme eingeführte Schaufel gepresst. Dabei ist auch ein flächiger Kontakt zwischen Spannelement und Schaufel leicht realisierbar.

Das Spannelement kann Flachseiten der zugehörigen Schaufel kontaktieren. Das Spannelement kann aber auch an Kanten der Schaufel angreifen. Der Kontakt kann kraftschlüssig oder auch formschlüssig sein.

Die Spannelemente können auch durch andere Körperformen, z.B. Rollen, realisiert werden.

Die mindestens eine Werkzeugaufnahme kann u-förmig mit einer offenen Seite zum seitlichen Einschieben einer Schaufel sein. Die mindestens eine Werkzeugaufnahme kann aber auch ringförmig geschlossen sein und wird dann über ein offenes Ende einer Schaufel von oben auf die Schaufel geschoben.

Eine Stabilisierungseinrichtung in den soeben vorgestellten Varianten kann zur Dämpfung der zu bearbeitenden Schaufel dienen, wenn die durch das federelastische Element beziehungsweise das Fluid ausgeübte Presskraft hinreichend ist, die Stabilisierungseinrichtung an der Schaufel zu halten. Grundsätzlich kann jedoch die federelastische Pressung der Spannelemente gegen die zugehörige Schaufel mit einem geringen Kraftaufwand durchgeführt werden, um das Material der Schaufel mechanisch möglichst gering zu belasten. Es ist lediglich relevant, dass eine vorzugsweise klemmende Kontaktierung zwischen der Schaufel und der Stabilisierungseinrichtung, vorzugsweise der Werkstückaufnahme, gegeben ist.

Es kann vorteilhaft sein, für jedes Spannelement mindestens zwei federelastische Elemente vorzusehen, die zwischen dem Spannelement und dem Grundkörper wirken. Weisen die federelastischen Elemente einen hinreichenden Abstand zueinander auf, können sie gleichzeitig eine Führung für das zugehörige Spannelement bilden und zusätzliche Führungsmaßnahmen können entfallen. Dies gilt insbesondere, wenn das Spannelement eine Längsausdehnung aufweist, um die Schaufel an zwei zueinander beabstandeten Punkten kontaktieren zu können.

Eine besonders wirkungsvolle Fixierung der Stabilisierungseinrichtung an der Schaufel kann erreicht werden, wenn Mittel zum Fixieren des mindestens einen Spannelements innerhalb der Stabilisierungseinrichtung vorgesehen sind. Eine Fixierung bedeutet, dass das fixierte Spannelement relativ zum Grundkörper festgelegt ist. Wenn Grundkörper und das mindestens eine Spannelement starr aneinander fixiert sind, während die Stabilisierungseinrichtung mittels des Spannelements an einer in der mindestens einen Werkstückaufnahme befindlichen Schaufel geklemmt ist, kann die Stabilisierungsvorrichtung nur noch dann gegen die an den Presskontakten zwischen Schaufel und Spannelement gegebene Reibungskraft relativ zur Schaufel bewegt werden, wenn eine absolut parallele Bewegung der Presskontakte möglich ist. Bei der typischerweise gewundenen Struktur von Schaufeln eines Laufrades hingegen ist bei fixierten Spannelementen, jedenfalls sofern diese aus einem starren Material sind, die Spanneinrichtung am Werkstück stabil festgelegt.

Die Mittel zur Fixierung der Spannelemente wirken vorzugsweise kraftschlüssig. Die Mittel zur Fixierung können zum Beispiel eine Hydraulik oder eine Pneumatik umfassen, die vorzugsweise auf mindestens einen Zylinder wirkt, welcher ein zugehöriges Spannelement gegen den Grundkörper oder ein sonstiges mit dem Grundkörper verbundenes Element presst.

Besonders vorteilhaft ist es, wenn die zum Fixieren des mindestens einen Spannelements aufgewendete Fixierkraft eine Komponente senkrecht zur Spannelement-Pressrichtung aufweist. Vorzugsweise sind Fixierkraft und Spannelement-Pressrichtung senkrecht aufeinander. Die Fixierkraft bewirkt zusammen mit einer zwischen Spannelement und vorzugsweise dem Grundkörper gegebenen Reibungskraft die Fixierung des Spannelements.

Insbesondere kann es auch vorteilhaft sein, die Stabilisierungseinrichtung modular aufzubauen, so dass die Stabilisierungseinrichtung erweiterbar ist, zum Beispiel durch Hinzufügung weiterer Werkstückaufnahmen. Im Falle eines Laufrades mit Schaufeln als Werkstück kann die Stabilisierungseinrichtung zwei, drei oder mehr Schaufeln gleichzeitig aufnehmen. Die Stabilisierungseinrichtung kann auch so ausgebildet sein, dass sämtliche Schaufeln eines Schaufelkranzes gleichzeitig aufgenommen und stabilisiert werden.

Alternativ kann eine Stabilisierungseinrichtung Mittel zur Befestigung der Stabilisierungseinrichtung an einer Schaufel sowie Mittel zur Dämpfung oder Tilgung von Werkstückschwingungen umfassen. Schwingungsdämpfer oder Schwingungstilger sind im Zusammenhang mit Bauwerken, wie z.B. Brücken, Schornsteine oder Treppen, bekannt. Schwingungsdämpfer oder Schwingungstilger nehmen zumindest einen Teil der Schwingungsenergie eines schwingenden Werkstückes vorzugsweise mittels mindestens einer an mindestens einem Federelement gelagerten Schwingmasse, sowie optional mindestens eines Dämpfungselements auf und verhindern so ein Aufschaukeln der Werkstückschwingung indem sie eine phasengleiche Gegenkraft erzeugen und, je nach Bauform, die Energie der Schwingung im Dämpfungselement verbrauchen. Schwingungsdämpfer oder Schwingungstilger sind in ihren Schwingungseigenschaften einstellbar, z. B. über die Anzahl und Anordnung der eingesetzten Federelemente, die Federkonstanten, die vorzugsweise modulare Schwingmasse oder die Art des Dämpfungselements.

Schwingungsdämpfer oder Schwingungstilger gemäß der diesseitigen Erfindung können wie auch die Stabilisierungseinrichtung nach einem der Ansprüche 13 bis 18 eine vorzugsweise selbstklemmende Werkstückaufnahme aufweisen, die zum Aufstecken auf die Schaufel dient. Alternativ kann ein Schwingungstilger oder Schwingungsdämpfer auch aufgeklebt oder mittels weiterer oberflächenschonender Methoden angebracht werden.

Das Anbringen des Schwingungsdämpfers oder Schwingungstilgers kann automatisiert, z.B. in einer Maschine, beispielsweise einer CNC-Bearbeitungsmaschine, mittels eines Handhabungsarmes, der vorzugsweise gleichzeitig zur Bearbeitung dient und z. B. eine Bearbeitungsspindel umfasst, erfolgen.

Im Folgenden werden beispielhafte Ausgestaltungen des erfindungsgemäßen Verfahrens, des erfindungsgemäßen Vorrichtungssystems und der Stabilisierungseinrichtung anhand von Figuren dargestellt.

Es zeigt schematisch
- Fig. 1:: ausschnittsweise eine Bearbeitungsvorrichtung mit einem zu bearbeitenden Laufrad,
- Fig. 2:: eine Stabilisierungseinrichtung im zusammengesetzten Zustand,
- Fig. 3:: die Stabilisierungseinrichtung in einem teildemontierten Zustand,
- Fig. 4:: die Stabilisierungseinrichtung an einem Applikationsschaft eines Bearbeitungsarmes,
- Fig. 5:: die an einem Laufrad fixierte Stabilisierungseinrichtung mit abgekoppeltem Applikationsschaft,
- Fig. 6:: die am Laufrad fixierte Stabilisierungseinrichtung gem. Fig. 5 in vergrößerter Darstellung,
- Fig. 7:: eine Schaufel mit einem Schwingungstilger,
- Fig. 8a:: Schaufel und Schwingungstilger nach Fig. 7 in einem ersten Schnitt
- Fig. 8b:: der Schwingungstilger im Schnitt gem. Fig. 8a in vergrößerter Darstellung,
- Fig. 9:: Schaufel und Schwingungstilger nach Fig. 7 in einem zweiten Schnitt.

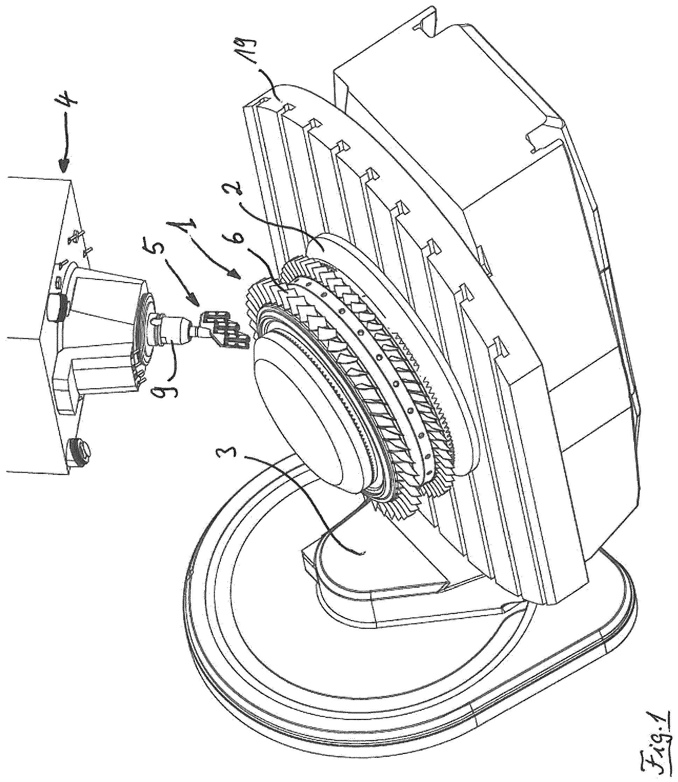

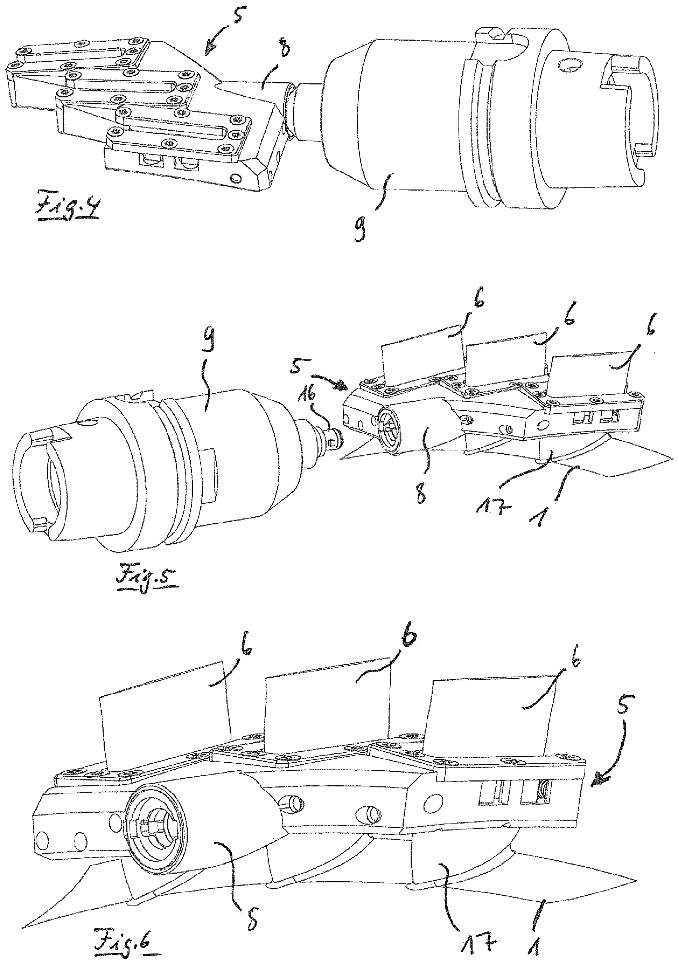

Fig. 1 zeigt ein in BLISK-Bauweise hergestelltes Laufrad 1, welches in einer Werkstückhalterung 2 einer hier nur ausschnittsweise dargestellten Bearbeitungsvorrichtung eingespannt ist. Die in einer Grundplatte 19 angeordnete Werkstückhalterung 2 ist über einen Aufnahmeschwenkarm 3 schwenkbar gehalten. Ein Bearbeitungsarm 4 trägt eine Stabilisierungseinrichtung 5, die mittels des Bearbeitungsarms 4 derart in das Laufrad 1 automatisiert eingesetzt und fixiert wird, dass die Stabilisierungseinrichtung 5 drei Schaufeln 6 des Laufrades 1 umfasst. Die Position der Stabilisierungseinrichtung 5 an den Schaufeln 6 ist weiter unten im Zusammenhang mit den Figuren 5 und 6 ausführlich dargestellt.

Nach dem Einsetzen der Stabilisierungseinrichtung 5 auf das Laufrad 1 wird der Bearbeitungsarm 4, der auch eine Bearbeitungsspindel umfassen kann, von der Stabilisierungseinrichtung 5 gelöst und nimmt automatisiert ein hier nicht dargestelltes Bearbeitungswerkzeug auf, womit die mittels der Stabilisierungseinrichtung 5 stabilisierten Schaufeln 6 bearbeitet werden. Nach vollzogener Bearbeitung der stabilisierten Schaufeln 6 wird das Bearbeitungswerkzeug entfernt, z. B. durch Ablage in ein Werkzeugmagazin. Anschließend wird mittels des Bearbeitungsarms 4 die Stabilisierungseinrichtung 5 von den Schaufeln 6 gelöst, um entweder an denselben Schaufeln 6 in einer anderen Position erneut zur Stabilisierung eingesetzt zu werden oder um eine weitere Gruppe von Schaufeln 6 für eine anschließende Bearbeitung zu stabilisieren.

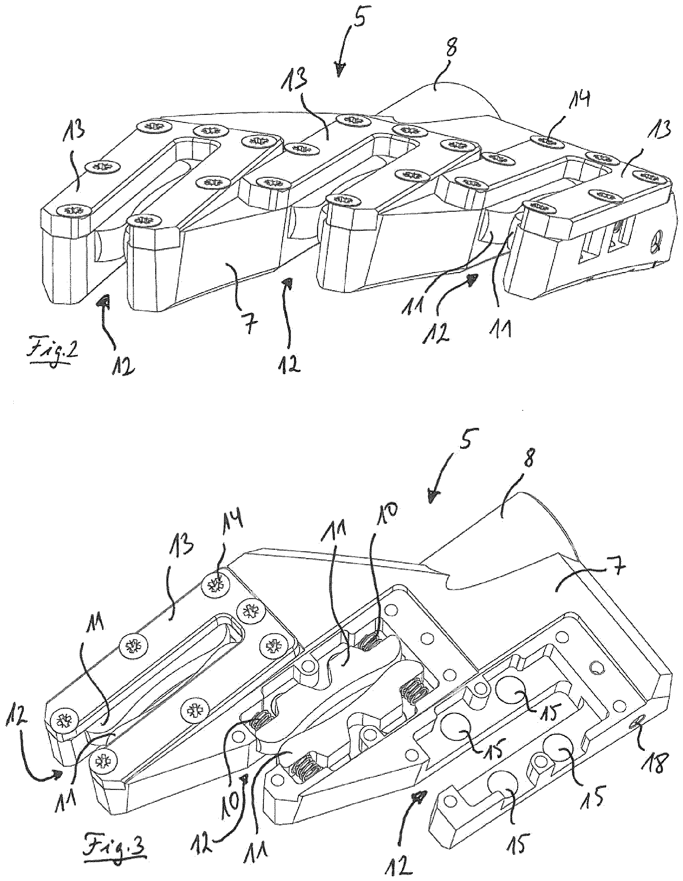

In den Figuren 2 bis 6 wird die Stabilisierungseinrichtung 5 im Aufbau sowie im Einsatz an den Schaufeln 6 des Laufrades 1 näher dargestellt.

Die Stabilisierungseinrichtung 5 umfasst einen Grundkörper 7 mit einer Schaftaufnahme 8 für einen Applikationsschaft 9 des Bearbeitungsarmes 4 (siehe Fig. 1). Der Applikationsschaft 9 kann z.B. in der Form einer üblichen Hohlschaftkegel-Werkzeugaufnahme ausgeführt sein oder eine solche umfassen.

Der Grundkörper 7 weist drei Schaufelaufnahmen 12 auf. In jede Schaufelaufnahme 12 ragen jeweils zwei Spannelemente 11 hinein, die als Spannelemente-Paar zusammenwirken. In Fig. 3 ist die Stabilisierungseinrichtung 5 teildemontiert dargestellt, um den Aufbau deutlich darzustellen. Im fertig montierten Zustand sind sämtliche Schaufelaufnahmen 12 durch Deckplatten 13 abgedeckt, die mittels Schrauben 14 am Grundkörper 7 fixiert sind. Die Spannelemente 11 sind jeweils über zwei zueinander beabstandete Federelemente 10 am Grundkörper 7 gehalten. Die Federelemente 10 jedes Spannelements 11 wirken mit Ihrer Federkraft in Richtung auf das andere Spannelement 11 desselben Spannelemente-Paares.

Fig. 4 zeigt die Stabilisierungseinrichtung 5 an dem Applikationsschaft 9 fixiert.

Fig. 5 zeigt die Stabilisierungseinrichtung 5 aufgesetzt auf dem Laufrad 1, welches hier nur ausschnittsweise dargestellt ist. Jede der drei Schaufelaufnahmen 12 umfasst eine der Schaufeln 6. Die Stabilisierungseinrichtung 5 wird seitlich auf die Schaufeln 6 aufgeschoben, so dass die Schaufeln 6 in die Schaufelaufnahme 12 eingleiten. Um das Eingleiten der Schaufeln 6 zu erleichtern sind die durch die Federelemente 10 gegeneinander verspannten Spannelemente 11 zur Eingangsseite der Schaufelaufnahme 12 hin abgerundet ausgebildet.

Wenn sich die Stabilisierungseinrichtung 5 noch vom Applikationsschaft 9 gehalten auf den Schaufeln 6 in der Endposition befindet, werden die Spannelemente 11 in einer zur Kraftrichtung der Federelemente 10 senkrechten Richtung verklemmt, indem die Spannelemente 11 mittels Hubzylindern 15 gegen die zugehörige Deckplatte 13 gepresst werden. Die Bedienung der Hubzylinder 15 erfolgt hydraulisch oder pneumatisch mittels eines Fluids über den Bearbeitungsarm 4, welches vorzugsweise auch als Kühlschmierstoff für die Bearbeitung dient.

Vor dem Abkoppeln des Applikationsschaftes 9 von der Stabilisierungseinrichtung 5 wird zur Erhaltung des Fluiddrucks im Grundkörper 7 eine hier nicht dargestellte für den Eintritt des Fluids vorgesehene Eintrittsöffnung des Grundkörpers 7 verschlossen. Dies kann z.B. mechanisch durch eine Bewegung, z.B. eine Drehbewegung, des Applikationsschaftes 9 oder eines Teils hiervon, z.B. eines vorderen Eingriffsstifts 16, relativ zur Stabilisierungseinrichtung 5 erreicht werden. Mit dem Druck wird gleichzeitig die Klemmwirkung auf die Spannelemente 11 aufrechterhalten. Der Eingriffsstift 16 ist vorzugsweise derart gestaltet, dass er von einer üblichen Hohlschaftkegel-Werkzeugaufnahme aufgenommen werden kann, der dann mit dem Eingriffsstift 16 den Applikationsschaft 9 bilden kann.

Die Klemmung der Spannelemente 11 mittels der Hubzylinder 15 bewirkt, dass die Stabilisierungseinrichtung 5 starr an den Schaufeln 6 fixiert ist. Da die Klemmkraft senkrecht zur Federkraft der Federelemente 10 ausgerichtet ist, hat die Klemmkraft keine Komponente in Richtung auf die Schaufeln 6, die dadurch nicht belastet werden.

Nachdem die Stabilisierungseinrichtung 5 angebracht ist, können die Schaufeln 6 in ihrem die Stabilisierungseinrichtung 5 überragenden Teil einer Bearbeitung, insbesondere einer Endbearbeitung, unterzogen werden. Die Stabilisierungseinrichtung 5 sorgt dafür, dass die Schaufeln 6 während der Bearbeitung dem Werkzeugdruck nicht oder allenfalls in deutlich reduzierter Weise nachgeben. Zudem wird die freischwingende Länge der Schaufeln 6 derart reduziert, dass störende Schwingungen unterbleiben oder zumindest minimiert werden.

Es ist möglich, die Stabilisierungseinrichtung 5 an denselben Schaufeln 6 nacheinander in unterschiedlichen Höhen zu fixieren und die Bearbeitung immer in lediglich geringem Abstand zur Stabilisierungseinrichtung 5 durchzuführen. So kann mit einer obersten Stabilisierungsposition begonnen und sukzessive die Stabilisierungseinrichtung 5 in zunehmend niedrigeren Höhen der Schaufeln 6 fixiert werden. Auf diese Weise kann Während der Bearbeitung der Schaufeln 6 der Abstand des nicht dargestellten Bearbeitungswerkzeuges zur Stabilisierungseinrichtung 5 gering gehalten werden. Im Bereich des Schaufelfußes 17 kann eine Endbearbeitung ohne eingesetzte Stabilisierungseinrichtung 5 erfolgen, da dort die Stabilität der Schaufeln 6 hinreichend ist und sich ergebende Schwingungsamplituden gering sind.

Fig. 6 zeigt die Situation gemäß Fig. 5 ohne den Applikationsschaft 9 des Bearbeitungsarms 4 (siehe Fig. 1) in vergrößerter Darstellung.

Die für die Hydraulikflüssigkeit vorhandenen Druckleitungen sind in den Figuren nicht sichtbar dargestellt, da sie vorteilhaft im Grundkörper 7 als innenliegende Bohrungen ausgeführt sind. Zum Lösen der Stabilisierungseinrichtung 5 von den Schaufeln 6 wird der Druck der Hydraulikflüssigkeit abgelassen, vorzugsweise über einen hier nicht dargestellten Fluidverschluss, welcher z.B. durch eine Relativbewegung zwischen Applikationsschaft 9 und Stabilisierungseinrichtung 5 geöffnet und verschlossen werden kann.

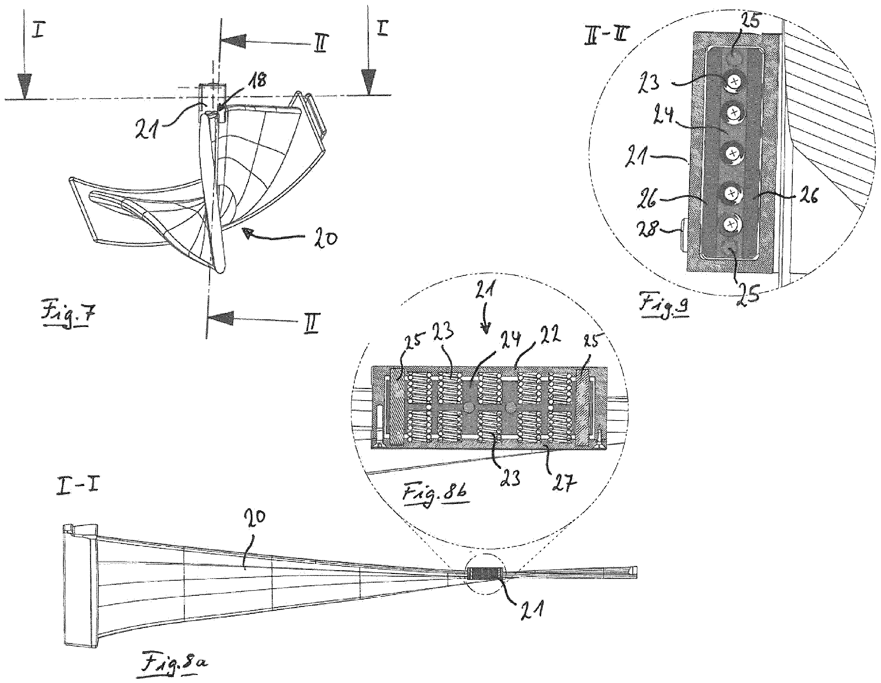

Fig. 7 zeigt schematisch eine Schaufel 20, wie sie typischerweise für die stationäre Energieerzeugung in Dampfturbinen eingesetzt wird, mit einem Schwingungstilger 21, welcher mit seiner Werkstückaufnahme 18 auf die Schaufel 20 selbstklemmend aufgesetzt ist. Fig. 8a zeigt den Schwingungstilger 21 im Schnitt I-I der Fig. 7 mit perspektivischer Darstellung der Schaufel 20 und Fig. 8b den Schwingungstilger 21 in vergrößerter Darstellung des Schnittes gem. Fig. 8a. In Fig. 9 ist der Schwingungstilger 21 vergrößert im Schnitt II-II der Fig. 7 zu sehen.

In einem Grundkörper 22 des Schwingungstilgers 21 ist über Federn 23 ein Massenträger 24 gehalten, der bei Anregung relativ zum Grundkörper 22 schwingt. Die Schwingung ist über Führungsbolzen 25 geführt. Am Massenträger 24 sind Zusatzmassen 26 vorgesehen, die vorzugsweise modular aufgebaut sind, so dass die gesamte schwingende Masse aus Federn 23, Masseträger 24 und Zusatzmassen 26 veränderbar ist. Das Innere des Grundkörpers ist über einen abnehmbaren Gehäusedeckel 27 zugänglich. Durch das Schließen des Gehäusedeckels 27 werden die Federn 23 vorgespannt und das Gehäuse 27 dicht verschlossen. Über eine Öleinlassschraube 28 kann anschließend der verschlossene Grundkörper 22 mit einem viskoelastischen Dämpfungsfluid befüllt werden. Über die Viskosität des Dämpfungsfluids und die Füllhöhe können die Dämpfungseigenschaften des Tilgers eingestellt werden,

### Bezugszeichenliste

- 1: Laufrad
- 2: Werkstückhalterung
- 3: Aufnahmeschwenkarm
- 4: Bearbeitungsarm
- 5: Stabilisierungseinrichtung
- 6: Schaufel
- 7: Grundkörper
- 8: Schaftaufnahmen
- 9: Applikationsschaft
- 10: Federelement
- 11: Spannelement
- 12: Schaufelaufnahme
- 13: Deckplatte
- 14: Schraube
- 15: Hubzylinder
- 16: Eingriffsstift
- 17: Schaufelfuß
- 18: Werkstückaufnahme
- 19: Grundplatte
- 20: Schaufel
- 21: Schwingungstilger
- 22: Grundkörper
- 23: Feder
- 24: Masseträger
- 25: Führungsbolzen
- 26: Zusatzmasse
- 27: Gehäusedeckel
- 28: Öleinlassschraube

## Patentansprüche

1. Verfahren zur Bearbeitung von Schaufeln eines Laufrades mittels eines Bearbeitungswerkzeuges, bei dem
das Laufrad (1) in einer Werkstückhalterung (2) gehalten und eine von der Werkstückhalterung (2) verschiedene und die zu bearbeitende Schaufel (6, 20) während der Bearbeitung mechanisch stabilisierende Stabilisierungseinrichtung (5, 21) an der zu bearbeitenden Schaufel (6, 20) klemmend befestigt wird.

2. Verfahren nach Anspruch 1, **dadurch gekennzeichnet, dass** die Stabilisierungseinrichtung (5, 21) zur Schwingungsdämpfung oder Schwingungstilgung eingesetzt wird.

3. Verfahren nach Anspruch 1 oder 2, **dadurch gekennzeichnet, dass**
a) die zu bearbeitende Schaufel (6, 20) in eine Werkstückaufnahme (12, 18) der Stabilisierungseinrichtung (5, 21) eingeführt wird,
b) in der Werkstückaufnahme (12, 18) mindestens ein Spannelement (11) federelastisch in einer Spannelement-Pressrichtung gegen die zu bearbeitende Schaufel (6, 20) gepresst wird.

4. Verfahren nach einem der Ansprüche 1 bis 3, **dadurch gekennzeichnet, dass** die Stabilisierungseinrichtung zum einen an einer ersten zu bearbeitenden Schaufel (6) klemmend und zum anderen an mindestens einer weiteren Schaufel (6) des Laufrades (1) oder an mindestens einer gesonderten Befestigungseinheit befestigt wird.

5. Verfahren nach Anspruch 4, **dadurch gekennzeichnet, dass** die Stabilisierungseinrichtung (5, 21) an der mindestens einen weiteren Schaufel (6) des Laufrades (1) befestigt wird, wobei die Stabilisierungseinrichtung (5, 21) für jede weitere zur Befestigung vorgesehene Schaufel (6) jeweils eine weitere Werkstückaufnahme (12, 18) aufweist und bei mindestens zweien der Werkstückaufnahmen (12, 18) gemäß den Verfahrensschritten a) und b) des Anspruchs 3 vorgegangen wird.

6. Verfahren nach einem der Ansprüche 3 bis 5, **dadurch gekennzeichnet, dass** das mindestens eine Spannelement (11) mit einer Fixierkraft in der Stabilisierungseinrichtung (5, 21) fixiert wird, wobei die Fixierkraft eine senkrecht zur Spannelement-Pressrichtung wirkende Kraftkomponente aufweist.

7. Vorrichtungssystem zur Bearbeitung von Schaufeln eines Laufrades, umfassend
einen mindestens eine Werkstückhalterung (2) zur Halterung des Laufrades (1) aufweisenden Maschinenkörper,
und mindestens ein Bearbeitungswerkzeug,
**gekennzeichnet durch**
mindestens eine von der Werkstückhalterung (2) verschiedene und zur klemmenden Befestigung an der zu bearbeitenden Schaufel (1, 20) geeignete Stabilisierungseinrichtung (5, 21).

8. Vorrichtungssystem nach Anspruch 7, **dadurch gekennzeichnet, dass** die Stabilisierungseinrichtung (5, 21) eingerichtet ist, Schwingungen der zu bearbeitenden Schaufel (1) zu dämpfen oder zu tilgen.

9. Vorrichtungssystem nach Anspruch 7 oder 8, **dadurch gekennzeichnet, dass** die Stabilisierungseinrichtung (5, 21) mindestens eine Werkstückaufnahme (12, 18) für eine erste Schaufel (6) des in der Werkstückhalterung (2) gehaltenen Laufrades (1), erste Befestigungsmittel zur klemmenden Befestigung der Stabilisierungseinrichtung (5, 21) an der ersten Schaufel (6) des Laufrades (1) und zweite Befestigungsmittel zur Befestigung der Stabilisierungseinrichtung (5, 21) an einer zweiten Schaufel (6) des Laufrades (1) oder an einer nicht zum Laufrad (1) gehörenden Befestigungseinheit aufweist.

10. Vorrichtungssystem nach einem der Ansprüche 7 bis 9, **gekennzeichnet durch** Betätigungsmittel zur Betätigung der Stabilisierungseinrichtung (5, 21) mittels eines Fluids, wobei vorzugsweise das Fluid auch ein bei der Werkstückbearbeitung vorgesehener Kühlschmierstoff ist.

11. Vorrichtungssystem nach einem der Ansprüche 7 bis 10, **dadurch gekennzeichnet, dass** das Vorrichtungssystem eine CNC-Maschine umfasst, wobei die CNC-Maschine mindestens einen Handhabungsarm (4) mit Mitteln zum gesteuerten Greifen und Führen der Stabilisierungseinrichtung (5, 21) aufweist.

12. Vorrichtungssystem nach Anspruch 11 mit Rückbezug auf Anspruch 10, **dadurch gekennzeichnet, dass** das Fluid durch den mindestens einen Handhabungsarm (4) geführt ist.

13. Vorrichtungssystem nach Anspruch 7 oder 8, **dadurch gekennzeichnet, dass** die Stabilisierungseinrichtung (5, 21) einen Grundkörper (7) mit mindestens einer Werkstückaufnahme (12, 18) und mindestens ein in der mindestens einen Werkzeugaufnahme (12, 18) relativ zum Grundkörper (7) bewegbares Spannelement (11) aufweist.

14. Vorrichtungssystem nach Anspruch 13, **gekennzeichnet durch** mindestens ein zwischen dem mindestens einen Spannelement (11) und dem Grundkörper (7) wirkendes federelastisches Element (10).

15. Vorrichtungssystem nach Anspruch 14, **dadurch gekennzeichnet, dass** das Spannelement (11) oder mindestens eines der Spannelemente (11) durch mindestens zwei zueinander beabstandete federelastische Elemente (10) am Grundkörper (7) gehalten ist.

16. Vorrichtungssystem nach Anspruch 14 oder 15, **dadurch gekennzeichnet, dass** an mindestens einer der Werkstückaufnahmen (12, 18) zwei Spannelemente (11) vorgesehen und derart ausgerichtet sind, dass die Spannelemente (11) mittels der zugehörigen federelastischen Elemente (10) aus zwei entgegengesetzten Richtungen und auf zwei einander gegenüberliegende Oberflächenelemente einer in der Werkstückaufnahme (12, 18) befindlichen Schaufel (6) des Laufrades (1, 20) pressend wirken.

17. Vorrichtungssystem nach einem der Ansprüche 13 bis 16, **gekennzeichnet durch** Fixierungsmittel zum Fixieren des mindestens einen Spannelements (11) innerhalb der Stabilisierungseinrichtung (5, 21), wobei die Fixierungsmittel vorzugsweise eine kraftschlüssige Fixierung bewirken.

18. Vorrichtungssystem nach Anspruch 17 mit Rückbezug auf einen der Ansprüche 14 bis 16, **dadurch gekennzeichnet, dass** eine durch die Fixierungsmittel erzeugte Fixierkraft eine Komponente senkrecht zur Federkraft des federelastischen Elementes (10) oder der federelastischen Elemente (10) aufweist.

19. Vorrichtungssystem nach Anspruch 7 oder 8, **dadurch gekennzeichnet, dass** die Stabilisierungseinrichtung (5, 21) Mittel zur Befestigung der Stabilisierungseinrichtung (5, 21) an einer Schaufel (6, 20) sowie Mittel zur Dämpfung oder Tilgung von Werkstückschwingungen aufweist.

## Claims

1. Method for machining blades of a rotor by means of a machining tool, in which
the rotor (1) is held in a workpiece mounting (2) and a stabilizing installation (5, 21) that is different from the workpiece mounting (2) and mechanically stabilizes the blade (6, 20) to be machined during machining is fastened in a clamping manner to the blade (6, 20) to be machined.

2. Method according to Claim 1, **characterized in that** the stabilizing installation (5, 21) is used for damping vibrations or cancelling vibrations.

3. Method according to Claim 1 or 2, **characterized in that**
a) the blade (6, 20) to be machined is introduced into a workpiece receptacle (12, 18) of the stabilizing installation (5, 21);
b) in the workpiece receptacle (12, 18) at least one tensioning element (11) is pressed in a spring-elastic manner in a tension-element pressing direction against the blade (6, 20) to be machined.

4. Method according to one of Claims 1 to 3, **characterized in that** the stabilizing installation is fastened in a clamping manner to a first blade (6) to be machined, on the one hand, and to at least one further blade (6) of the rotor (1) or to at least one separate fastening unit, on the other hand.

5. Method according to Claim 4, **characterized in that** the stabilizing installation (5, 21) is fastened to the at least one further blade (6) of the rotor (1), wherein the stabilizing installation (5, 21) for each further blade (6) envisaged for fastening has in each case one further workpiece receptacle (12, 18), and in the case of at least two of the workpiece receptacles (12, 18) the procedure is according to the method steps a) and b) of Claim 3.

6. Method according to one of Claims 3 to 5, **characterized in that** the at least one tensioning element (11) is fixed in the stabilizing installation (5, 21) by way of a fixing force, wherein the fixing force has a force component that acts perpendicularly to the tensioning-element pressing direction.

7. Device system for machining blades of a rotor, comprising
a machine member that has at least one workpiece mounting (2) for mounting the rotor (1); and
at least one machining tool;
**characterized by**
at least one stabilizing installation (5, 21) that is different from the workpiece mounting (2) and is suitable for fastening in a clamping manner to the blade (1, 20) to be machined.

8. Device system according to Claim 7, **characterized in that** the stabilizing installation (5, 21) is specified for damping or cancelling vibrations of the blade (1) to be machined.

9. Device system according to Claim 7 or 8, **characterized in that** the stabilizing installation (5, 21) has at least one workpiece receptacle (12, 18) for a first blade (6) of the rotor (1) that is held in the workpiece mounting (2), first fastening means for fastening in a clamping manner the stabilizing installation (5, 21) to the first blade (6) of the rotor (1), and second fastening means for fastening the stabilizing installation (5, 21) to a second blade (6) of the rotor (1), or to a fastening unit that is not associated with the rotor (1).

10. Device system according to one of Claims 7 to 9, **characterized by** activating means for activating the stabilizing installation (5, 21) by means of a fluid, wherein the fluid is preferably a cooling lubricant that is also provided in the machining of the workpiece.

11. Device system according to one of Claims 7 to 10, **characterized in that** the device system comprises a CNC machine, wherein the CNC machine has at least one manipulator arm (4) having means for gripping and guiding the stabilizing installation (5, 21) in a controlled manner.

12. Device system according to Claim 11, referring back to Claim 10, **characterized in that** the fluid is guided through the at least one manipulator arm (4) .

13. Device system according to Claim 7 or 8, **characterized in that** the stabilizing installation (5, 21) has a main body (7) having at least one workpiece receptacle (12, 18) and at least one tensioning element (11) that in the at least one workpiece receptacle (12, 18) is movable relative to the main body (7).

14. Device system according to Claim 13, **characterized by** at least one spring-elastic element (10) that acts between the at least one tensioning element (11) and the main body (7).

15. Device system according to Claim 14, **characterized in that** the tensioning element (11), or at least one of the tensioning elements (11), is held on the main body (7) by at least two mutually spaced apart spring-elastic elements (10).

16. Device system according to Claim 14 or 15, **characterized in that** two tensioning elements (11) are provided and aligned on at least one of the workpiece receptacles (12, 18) in such a manner that the tensioning elements (11) by means of the associated spring-elastic elements (10) act in a pressing manner from two opposite directions and on two mutually opposite surface elements of a blade (6) of the rotor (1, 20) that is located in the workpiece receptacle (12, 18).

17. Device system according to one of Claims 13 to 16, **characterized by** fixing means for fixing the at least one tensioning element (11) within the stabilizing installation (5, 21), wherein the fixing means preferably cause fixing in a force-fitting manner.

18. Device system according to Claim 17, referring back to one of Claims 14 to 16, **characterized in that** a fixing force that is generated by the fixing means has a component that is perpendicular to the spring force of the spring-elastic element (10) or the spring-elastic elements (10).

19. Device system according to Claim 7 or 8, **characterized in that** the stabilizing installation (5, 21) has means for fastening the stabilizing installation (5, 21) to a blade (6, 20), as well as means for damping or cancelling vibrations of workpieces.

## Revendications

1. Procédé pour l'usinage d'aubes d'un rotor au moyen d'un outil d'usinage, dans lequel le rotor (1) est retenu dans une fixation de pièce (2) et un dispositif de stabilisation (5, 21), différent de la fixation de pièce (2) et stabilisant mécaniquement l'aube à usiner (6, 20) pendant l'usinage, est fixé par serrage à l'aube à usiner (6, 20).

2. Procédé selon la revendication 1, **caractérisé en ce que** le dispositif de stabilisation (5, 21) est utilisé pour l'amortissement des vibrations ou pour la compensation des vibrations.

3. Procédé selon la revendication 1 ou 2, **caractérisé en ce que**
a) l'aube à usiner (6, 20) est introduite dans un porte-pièce (12, 18) du dispositif de stabilisation (5, 21),
b) au moins un élément de serrage (11) est pressé de manière élastique à ressort dans le porte-pièce (12, 18) dans une direction de pressage d'élément de serrage contre l'aube à usiner (6, 20).

4. Procédé selon l'une quelconque des revendications 1 à 3, **caractérisé en ce que** le dispositif de stabilisation est fixé d'une part par serrage à une première aube à usiner (6) et d'autre part à au moins une aube supplémentaire (6) du rotor (1) ou à une unité de fixation séparée.

5. Procédé selon la revendication 4, **caractérisé en ce que** le dispositif de stabilisation (5, 21) est fixé à l'au moins une aube supplémentaire (6) du rotor (1), le dispositif de stabilisation (5, 21) présentant, pour chaque aube supplémentaire (6) devant être fixée, à chaque fois un porte-pièce supplémentaire (12, 18) et chez au moins deux des porte-pièces (12, 18), on procède conformément aux étapes de procédé a) et b) de la revendication 3.

6. Procédé selon l'une quelconque des revendications 3 à 5, **caractérisé en ce que** l'au moins un élément de serrage (11) est fixé avec une force de fixation dans le dispositif de stabilisation (5, 21), la force de fixation présentant une composante de force agissant perpendiculairement à la direction de pressage de l'élément de serrage.

7. Système de dispositif pour l'usinage d'aubes d'un rotor, comprenant
un corps de machine présentant au moins une fixation de pièce (2) pour retenir le rotor (1),
et au moins un outil d'usinage,
**caractérisé par**
au moins un dispositif de stabilisation (5, 21) différent de la fixation de pièce (2) et approprié pour être fixé par serrage à l'aube à usiner (1, 20).

8. Système de dispositif selon la revendication 7, **caractérisé en ce que** le dispositif de stabilisation (5, 21) est prévu pour amortir ou compenser des vibrations de l'aube à usiner (1).

9. Système de dispositif selon la revendication 7 ou 8, **caractérisé en ce que** le dispositif de stabilisation (5, 21) présente au moins un porte-pièce (12, 18) pour une première aube (6) du rotor (1) retenu dans la fixation de pièce (2), des premiers moyens de fixation pour la fixation par serrage du dispositif de stabilisation (5, 21) à la première aube (6) du rotor (1) et des deuxièmes moyens de fixation pour la fixation du dispositif de stabilisation (5, 21) à une deuxième aube (6) du rotor (1) ou à une unité de fixation n'appartenant pas au rotor (1).

10. Système de dispositif selon l'une quelconque des revendications 7 à 9, **caractérisé par** des moyens d'actionnement pour l'actionnement du dispositif de stabilisation (5, 21) au moyen d'un fluide, le fluide étant de préférence également un lubrifiant de refroidissement prévu lors de l'usinage de la pièce.

11. Système de dispositif selon l'une quelconque des revendications 7 à 10, **caractérisé en ce que** le système de dispositif comprend une machine à commande numérique, la machine à commande numérique présentant au moins un bras de manipulation (4) avec des moyens pour saisir et guider de manière commandée le dispositif de stabilisation (5, 21).

12. Système de dispositif selon la revendication 11 lorsqu'elle se rapporte à la revendication 10, **caractérisé en ce que** le fluide est guidé par l'au moins un bras de manipulation (4).

13. Système de dispositif selon la revendication 7 ou 8, **caractérisé en ce que** le dispositif de stabilisation (5, 21) présente un corps de base (7) avec au moins un porte-pièce (12, 18) et au moins un élément de serrage (11) pouvant être déplacé dans l'au moins un porte-pièce (12, 18) par rapport au corps de base (7).

14. Système de dispositif selon la revendication 13, **caractérisé par** au moins un élément (10) élastique à ressort agissant entre l'au moins un élément de serrage (11) et le corps de base (7).

15. Système de dispositif selon la revendication 14, **caractérisé en ce que** l'élément de serrage (11) ou au moins l'un des éléments de serrage (11) est retenu par au moins deux éléments élastiques à ressort (10) espacés l'un de l'autre sur le corps de base (7).

16. Système de dispositif selon la revendication 14 ou 15, **caractérisé en ce que** deux éléments de serrage (11) sont prévus au niveau d'au moins l'un des porte-pièces (12, 18) et sont conçus de telle sorte que les éléments de serrage (11) agissent par pressage au moyen des éléments élastiques à ressort associés (10) à partir de deux directions opposées et sur deux éléments de surface opposés l'un à l'autre d'une aube (6) du rotor (1, 20) se trouvant dans le porte-pièce (12, 18).

17. Système de dispositif selon l'une quelconque des revendications 13 à 16, **caractérisé par** des moyens de fixation pour la fixation de l'au moins un élément de serrage (11) à l'intérieur du dispositif de stabilisation (5, 21), les moyens de fixation provoquant de préférence une fixation par engagement par force.

18. Système de dispositif selon la revendication 17, lorsqu'elle se rapporte à l'une des revendications 14 à 16, **caractérisé en ce qu'**une force de fixation générée par les moyens de fixation présente une composante perpendiculairement à la force de ressort de l'élément élastique à ressort (10) ou des éléments élastiques à ressort (10).

19. Système de dispositif selon la revendication 7 ou 8, **caractérisé en ce que** le dispositif de stabilisation (5, 21) présente des moyens pour la fixation du dispositif de stabilisation (5, 21) à une aube (6, 20), ainsi que des moyens d'amortissement ou de compensation de vibrations de la pièce.
